# EUROPEAN PATENT APPLICATION

(11) **EP 4 811 528 A1**
(43) Date of publication of application: **23.09.2026**
(21) Application number: 24901145.3
(22) Date of filing: 06.12.2024
(51) Int. Cl.: H01M 50/46, H01M 50/446, H01M 50/451, H01M 50/414, H01M 50/403, H01M 50/417, H01M 10/052

(54) **SEPARATOR FOR ELECTROCHEMICAL DEVICE AND ELECTROCHEMICAL DEVICE COMPRISING SAME**

(30) Priority: 06.12.2023 KR 20230175900
(71) Applicant: LG Chem, Ltd., Seoul 07336 (KR)
(72) Inventor: LEE, Joo-Sung, Daejeon 34122 (KR); KIM, Kyeong-Rak, Daejeon 34122 (KR); KIM, Jin-Woo, Daejeon 34122 (KR); PARK, Je-Seob, Daejeon 34122 (KR)
(74) Representative: Hoffmann Eitle
(86) International application number: PCT/KR2024/020002
(87) International publication number: WO 2025/121959

(57) **Abstract**

The present disclosure provides a separator for an electrochemical device capable of improving lifespan properties by securing adhesion between the separator and an electrode, achieving an electrode adhesive layer with low resistance and improving electrolyte liquid impregnation, and an electrochemical device comprising the same.

The separator for an electrochemical device according to one embodiment of the present disclosure comprises: an olefin polymer porous support; an inorganic hybrid porous layer formed on at least one surface of the olefin polymer porous support; and an electrode adhesive layer formed on one surface of the inorganic hybrid porous layer not in contact with the olefin polymer porous support, wherein the electrode adhesive layer comprises at least one adhesive portion and at least one uncoated portion where the adhesive portion is not formed, a total coverage of the adhesive portion is 20% to 60% of a total area of the inorganic hybrid porous layer, and a minor-axis length of the adhesive portion is at most twice a thickness of the separator.

## Description

### Technical Field

The present disclosure relates to a separator for an electrochemical device, and an electrochemical device comprising the same.

This application claims priority to Korean Patent Application No. 10-2023-0175900 filed on December 6, 2023, the disclosure of which is incorporated herein by reference in its entirety.

### Background Art

Interest in energy storage technology is increasingly growing recently. As the field of application expands to energy of mobile phones, camcorders, notebook PCs and even electric vehicles, efforts on research and development for electrochemical devices are increasingly concretized. Among these, development of secondary batteries, which are rechargeable energy storage devices based on an electrochemical principle, is a focus of attention. In developing such batteries, research and development on new electrode and battery designs to improve capacity density and specific energy is recently underway.

Among these, demand for lithium secondary batteries as an energy source is rapidly increasing as technological development and demand for mobile devices increase. Recently, the use of lithium secondary batteries as power sources for electric vehicles (EV) and hybrid electric vehicles (HEV) is realized, making them a key growth driver for the secondary battery market.

Such a secondary battery has a structure in which a rechargeable electrode assembly with a structure of positive electrode/separator/negative electrode is mounted in a battery case, and the electrodes of positive electrode and negative electrode are prepared by applying an electrode active material and the like on one or both surfaces of a metal current collector, followed by drying and rolling.

Among these, the separator is one of critical factors determining a lifespan of a secondary battery, and performs a role of electrically insulating the positive electrode and the negative electrode. For use as a separator, the separator preferably has high ion permeability such as smooth passage of an electrolyte liquid, excellent mechanical strength, and stability in an electrolyte liquid.

However, separators commonly used in the art have insufficient adhesion to an electrode due to their material properties, causing a problem of partial lifting or wrinkling at the interface depending on the manufacturing process. In order to solve this problem, an adhesive layer is formed by coating a mixture of a binder polymer on a porous substrate, however, in this case, additional formation of the adhesive layer makes it difficult for an electrolyte liquid to pass through, and there is a problem of deteriorating battery output and cycle properties since the adhesive layer itself acts as resistance.

### DISCLOSURE

### Technical Problem

Accordingly, the present disclosure aims to solve the problems described above, and is directed to providing a separator for an electrochemical device capable of improving lifespan properties by securing adhesion between the separator and an electrode, obtaining an electrode adhesive layer having low resistance and improving electrolyte liquid impregnation, and an electrochemical device comprising the same.

### Technical Solution

The inventors of the present disclosure have found that the above-described problems may be solved through the following separator for an electrochemical device and electrochemical device comprising the same.

According to a first embodiment,
there is provided a separator for an electrochemical device, the separator comprising:
an olefin polymer porous support; an inorganic hybrid porous layer formed on at least one surface of the olefin polymer porous support; and
an electrode adhesive layer formed on one surface of the inorganic hybrid porous layer not in contact with the olefin polymer porous support,
wherein the electrode adhesive layer comprises at least one adhesive portion and at least one uncoated portion where the adhesive portion is not formed,
a total coverage of the adhesive portion is 20% to 60% of a total area of the inorganic hybrid porous layer, and
a minor-axis length of the adhesive portion is at most twice a thickness of the separator.

According to a second embodiment, in the first embodiment,
the adhesive portion has an irregular island shape.

According to a third embodiment, in the first or second embodiment,
the adhesive portion is irregularly distributed in the electrode adhesive layer.

According to a fourth embodiment, in any one of the first to third embodiments,
the electrode adhesive layer comprises a water-dispersible particle-type binder.

According to a fifth embodiment, in any one of the first to fourth embodiments,
the electrode adhesive layer further comprises a wetting agent.

According to a sixth embodiment, in any one of the first to fifth embodiments,
the electrode adhesive layer does not comprise a fluorine-based binder.

According to a seventh embodiment, in any one of the first to sixth embodiments,
the electrode adhesive layer has a loading amount per unit area of 0.16 g/m² to 0.5 g/m² based on a cross-section.

According to an eighth embodiment,
there is provided an electrochemical device comprising: a positive electrode; a negative electrode; and a separator interposed between the positive electrode and the negative electrode,
wherein the separator is the separator for an electrochemical device of any one of the first to seventh embodiments.

According to a ninth embodiment, in the eighth embodiment,
the electrochemical device is a lithium secondary battery.

According to a tenth embodiment,
there is provided a method for manufacturing the separator for an electrochemical device of any one of the first to seventh embodiments, the method comprising:
preparing an olefin polymer porous support;
applying a slurry comprising inorganic particles, a first binder polymer and a solvent on at least one surface of the olefin polymer porous support, and then drying the slurry to form an inorganic hybrid porous layer; and
applying a slurry comprising a water-dispersible particle-type binder and an aqueous solvent on one surface of the inorganic hybrid porous layer not in contact with the olefin polymer porous support, and then drying the slurry to form an electrode adhesive layer.

### Advantageous Effects

A separator according to the present disclosure has excellent adhesion to an electrode. Due to such properties, there is no partial lifting or wrinkling at an interface between the separator and an electrode, and safety is improved even under a high temperature condition.

In addition, an electrode adhesive layer formed on one surface of the separator does not interfere with ion conduction between the electrode and an inorganic hybrid porous layer, resulting in a low resistance increase rate and excellent lifespan properties.

In addition, as the electrode adhesive layer according to the present disclosure comprises specific adhesive portion and uncoated portion, electrolyte liquid impregnation and resistance properties can be secured while securing adhesion. In addition, uniformity can be ensured in the migration of lithium ions.

### Brief Description of Drawings

Drawings accompanying the present specification illustrate preferred examples of the present disclosure, and serve to aid in further understanding of the technical idea of the present disclosure together with the description of the present disclosure provided above, and therefore, the present disclosure should not be construed as being limited to matters described in these drawings.
FIG. 1 is an SEM image showing a surface of a separator according to Example 1.
FIG. 2 is an image obtained by analyzing the SEM image of the surface of the separator according to Example 1 using an image analysis tool.
FIG. 3 is an SEM image showing a surface of a separator according to Example 2.
FIG. 4 is an SEM image showing a surface of a separator according to Comparative Example 1.

### Mode for Invention

Hereinafter, the present disclosure will be described in detail. Prior to this, terms or words used in the present specification and the claims should not be interpreted limitedly to common or dictionary meanings, and need to be interpreted as meanings and concepts corresponding to the technical idea of the present disclosure based on a principle in which the inventors may suitably define the concept of terms in order to describe their own invention in the best possible way. Accordingly, constitutions illustrated in the embodiments described in the present specification are just most preferred one embodiment of the present disclosure and do not entirely represent the technical idea of the present disclosure, and therefore, it needs to be understood that there may be various equivalents and modified examples that may replace these at the time of filing.

Throughout the present specification, a description of a certain part "comprising" or "being provide with" a certain component means that it may further comprise or be further provided with other components, and does not exclude other components unless particularly stated on the contrary.

Throughout the present specification, a description of "A and/or B" refers to "A or B, or both".

The inventors of the present disclosure have developed a separator capable of, by comprising a specific electrode adhesive layer on the outermost layer of the separator, securing adhesion between the separator and an electrode, and at the same time, achieving low resistance and improving electrolyte liquid impregnation in a secondary battery.

A separator for an electrochemical device according to one embodiment of the present disclosure comprises:
an olefin polymer porous support; an inorganic hybrid porous layer formed on at least one surface of the olefin polymer porous support; and
an electrode adhesive layer formed on one surface of the inorganic hybrid porous layer not in contact with the olefin polymer porous support,
wherein the electrode adhesive layer comprises at least one adhesive portion and at least one uncoated portion where the adhesive portion is not formed,
a total coverage of the adhesive portion is 20% to 60% of a total area of the inorganic hybrid porous layer, and
a minor-axis length of the adhesive portion is at most twice a thickness of the separator.

### Electrode Adhesive Layer

The electrode adhesive layer is formed on at least one surface of the inorganic hybrid porous layer not in contact with the olefin polymer porous support, and may serve to adhere the separator and an electrode.

The electrode adhesive layer comprises at least one adhesive portion and at least one uncoated portion where the adhesive portion is not formed.

The adhesive portion refers to a portion where a slurry for forming the electrode adhesive layer is applied, and the at least one adhesive portion or a plurality of the adhesive portions may be formed spaced apart from each other on at least one surface of the inorganic hybrid porous layer. The uncoated portion refers to a portion where a slurry for forming the electrode adhesive layer is not applied, that is, a portion where the adhesive portion is not formed, and refers to a portion where at least one surface of the inorganic hybrid porous layer is exposed.

The adhesive portion may have an irregular island shape. This means that an individual adhesive portion has a shape that is not defined in a fixed form, and a plurality of the adhesive portions are formed spaced apart from each other, and the individual adhesive portion may have an island shape.

The adhesive portion may be irregularly distributed, meaning that the distance between the individual adhesive portions having irregular island shapes is not constant.

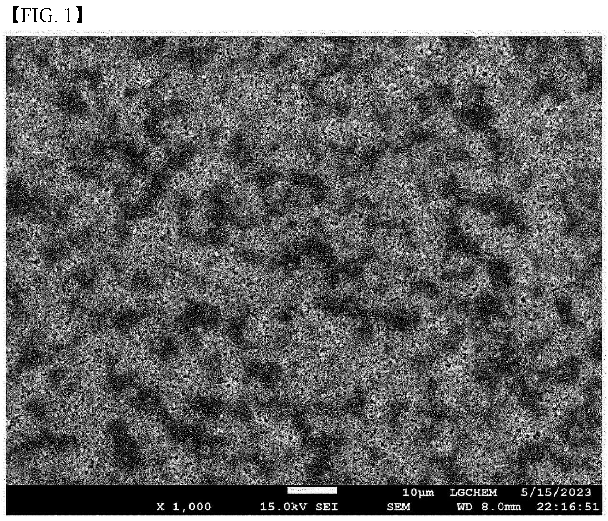

For example, referring to FIG. 1, the darkly shaded portions in FIG. 1 represent the adhesive portions, and the lightly shaded portions represent the uncoated portions. In FIG. 1, it may be confirmed that the adhesive portions have irregular island shapes and are irregularly distributed.

The total coverage of the adhesive portion is 20% to 60% of the total area of the inorganic hybrid porous layer. When the coverage satisfies such a range, electrolyte liquid impregnation and resistance properties may be secured while securing adhesion.

The total coverage of the adhesive portion may be determined using an image analysis tool after obtaining an image by observing the cross-section of the electrode adhesive layer using a scanning electron microscope (SEM) or optical microscope. Specifically, the manufactured separator is laminated in the order of release film/separator/negative electrode/separator/positive electrode, and then the laminate is compressed by applying heat at 85°C and pressure of 10 kg/cm² for 30 seconds. After that, the manufactured separator is separated from the release film, and the surface of the separator that had been in contact with the release film is observed using a scanning electron microscope. The image obtained as above may be used to distinguish an adhesive layer domain using a machine learning or deep learning method.

The minor-axis length of the adhesive portion is at most twice the thickness of the separator. When the minor-axis length of the adhesive portion exceeds twice the thickness of the separator, non-uniformity in lithium-ion migration occurs since the adhered interface is excessive, causing poor electrolyte liquid infiltration and a problem of Li plating during charging.

The minor-axis length of the adhesive portion refers to a length measured by recognizing an adhesive portion domain using an image analysis tool, and then measuring the shortest straight-line distance among straight lines connecting the center of an individual adhesive portion to its edge in the adhesive portion domain. The reference thickness of the separator refers to the sum of the thicknesses of the olefin polymer porous support, the inorganic hybrid porous layer and the electrode adhesive layer. Specifically, the minor-axis length of the adhesive portion may be determined by observing the cross-section of the electrode adhesive layer using a scanning electron microscope (SEM) or optical microscope to obtain an image, then measuring the minor-axis length of each of the individual adhesive portions in all the adhesive layer domains observed in the image, and calculating the average.

For example, the minor-axis length of the adhesive portion may be in a range of 1 *µ*m to 25 *µ*m, 3 *µ*m to 20 *µ*m, or 5 *µ*m to 15 *µ*m.

According to a specific embodiment of the present disclosure, the adhesive portion may have an irregular island shape in which the minor-axis length is at most twice the thickness of the separator. With such an irregular island shape, when injecting an electrolyte liquid from one side edge of a jelly-roll, an electrode/separator laminate, a flow path is secured for the electrolyte liquid to penetrate into the interface and pass through to the opposite edge, while at the same time securing adhesion between the electrode and the separator.

The adhesive layer may comprise a water-dispersible particle-type binder.

The water-dispersible particle-type binder may be in a mutually bound form, and by comprising the binder, pores and/or passages may be formed in the electrode adhesive layer. Accordingly, Li ions readily migrate, resulting in a low resistance increase rate and excellent lifespan properties. In addition, the binder does not penetrate into the pores of the porous layer, thereby not affecting porosity of the inorganic hybrid porous layer, and the content of the adhesive layer binder may be minimized in the separator. Specifically, since the binder does not penetrate into the pores in the inorganic hybrid porous layer, the binder is not substantially present on the surface of the olefin polymer porous support, and despite the formation of the adhesive layer, the resistance increase rate is low, and electrolyte liquid impregnation is excellent.

The fact that the binder is not substantially present on the surface of the olefin polymer porous support may be confirmed by analyzing the surface of the olefin polymer porous support by an IR spectrum.

The water-dispersible particle-type binder may comprise a styrene-butadiene-based polymer, an acrylic polymer, or two or more thereof.

The styrene-butadiene-based polymer may refer to a polymer containing a styrene monomer-derived repeating unit and a butadiene monomer repeating unit.

The acrylic polymer may refer to a polymer compound comprising a polymerization unit derived from a (meth)acrylate monomer, or a polymer compound comprising a repeating unit of a monomer in which some of substituents comprise a (meth)acryloyl group. For example, the acrylic binder resin may comprise an acrylic acid alkyl ester and/or a methacrylic acid alkyl ester having an alkyl group with 1 to 8 carbon atoms as a monomer. Examples of the acrylic acid alkyl ester may comprise at least one selected from among methyl acrylate, ethyl acrylate, isopropyl acrylate, n-butyl acrylate, isobutyl acrylate, cyclohexyl acrylate, and 2-ethylhexyl acrylate. In addition, examples of the methacrylic acid alkyl ester may comprise at least one selected from among methyl methacrylate, ethyl methacrylate, isopropyl methacrylate, n-butyl methacrylate, isobutyl methacrylate, cyclohexyl methacrylate, and 2-ethylhexyl methacrylate. However, the acrylic acid alkyl ester and the methacrylic acid alkyl ester are not particularly limited thereto.

The electrode adhesive layer may not comprise a fluorine-based binder in response to international regulations on per- and polyfluoroalkyl substances (PFAS).

The electrode adhesive layer may further comprise a wetting agent capable of swelling the particle-type binder.

The wetting agent may melt the surface of the aqueous particle-type binder in the electrode adhesive layer, and as a result, the adhesive portion of the electrode adhesive layer may have an irregular island shape, and a minor-axis length in a predetermined range.

The swelling agent may comprise a linear carbonate-based compound, a cyclic carbonate-based compound, an ester-based compound, or two or more thereof.

Specific examples of the linear carbonate-based compound may comprise dimethyl carbonate (DMC), diethyl carbonate (DEC), dipropyl carbonate, ethylmethyl carbonate (EMC), methylpropyl carbonate, ethylpropyl carbonate, or the like.

Specific examples of the cyclic carbonate-based compound may comprise ethylene carbonate (EC), propylene carbonate (PC), 1,2-butylene carbonate, 2,3-butylene carbonate, 1,2-pentylene carbonate, 2,3-pentylene carbonate, vinylene carbonate, or a halide thereof.

Specific examples of the ester-based compound may comprise methyl acetate, ethyl acetate, propyl acetate, methyl propionate, ethyl propionate, propyl propionate, γ-butyrolactone, γ-valerolactone, γ-caprolactone, σ-valerolactone, ε-caprolactone or the like. However, the ester-based compound is not particularly limited thereto.

Specifically, the swelling agent may be dimethyl carbonate (DMC), ethylene carbonate (EC), or a mixture thereof.

The electrode adhesive layer may have a loading amount per unit area in a range of 0.16 g/m² to 0.5 g/m², 0.20 g/m² to 0.45 g/m² based on the cross-section. As the loading amount satisfies the above-mentioned range, electrolyte liquid impregnation and resistance properties may be secured while securing adhesion.

### Olefin Polymer Porous Support

As the olefin polymer porous support, any planar olefin polymer porous support commonly used in secondary batteries such as porous polymer film substrates formed of various polymers, or porous nonwoven fabric substrates may be used.

The porous polymer film substrate may be a porous polymer film formed of an olefin polymer such as polyethylene or polypropylene, and such a porous polymer film substrate formed of an olefin polymer exhibits a shut-down function at a temperature of, for example, 80°C to 130°C.

Herein, the porous polymer film may be formed of an olefin polymer-based polymer such as polyethylene comprising high-density polyethylene, linear low-density polyethylene, low-density polyethylene or ultra-high molecular weight polyethylene, polypropylene, polybutylene or polypentene either alone or as a mixture of two or more thereof, or a derivative thereof.

Representative examples of the porous polymer film formed of an olefin polymer that may be used as such a porous polymer film may comprise wet polyethylene series (Asahi-Kasei E-Materials, Toray, SK IE Technology, Shanghai Energy, Senior, Sinoma, Entek), dry polypropylene series (Shenzhen Senior, Cangzhou Mingzhu), dry polypropylene/polyethylene multilayer structure series (Polypore, Ube), and the like, but are not limited thereto.

In addition, the porous polymer film substrate may also be prepared by being molded into a film shape using various polymers such as polyester in addition to the olefin polymer. In addition, the porous polymer film substrate may be formed to have a structure in which two or more film layers are laminated, and each of the film layers may be formed of a polymer such as the above-described olefin polymer or polyester either alone or as a mixture of two or more thereof.

In addition, the porous polymer film substrate and the porous nonwoven fabric substrate may be formed of, in addition to the olefin polymers as above, polyethylene terephthalate, polybutylene terephthalate, polyester, polyacetal, polyamide, polycarbonate, polyimide, polyetheretherketone, polyethersulfone, polyphenylene oxide, polyphenylene sulfide, polyethylene naphthalene or the like either alone or a polymer mixture thereof.

The thickness of such an olefin polymer porous support is not particularly limited, but may be 1 *µ*m or greater, 3 *µ*m or greater, 15 *µ*m or less, or 10 *µ*m or less. When the thickness satisfies such a range, the problem of the porous polymer substrate acting as a resistive layer may be improved while maintaining mechanical properties.

Pore size and porosity of the olefin polymer porous support are not particularly limited, however, the porosity may be in a range of 10% to 95%, and the pore size (diameter) may be 0.1 *µ*m to 50 *µ*m. When the pore size and the porosity satisfy such ranges, the problem of the porous polymer substrate acting as a resistive layer may be prevented, and mechanical properties may be maintained.

### Inorganic Hybrid Porous Layer

The inorganic hybrid porous layer may be formed on at least one surface of the olefin polymer porous support, and comprises a binder polymer and an inorganic filler. The inorganic hybrid porous layer functions as an isolation layer preventing a short-circuit between a positive electrode and a negative electrode as one component layer of the separator, and at the same time, may prevent the olefin polymer porous support from being in direct contact with lithium metal.

The inorganic hybrid porous layer may have porosity in a range of 5% to 95%, however, the porosity is not limited thereto. The inorganic hybrid porous layer may have a thickness of 1 *µ*m or greater, 1.5 *µ*m or greater, 15 *µ*m or less, or 10 *µ*m or less. When the thickness satisfies such a range, heat resistance is improved, an occurrence of short-circuit is suppressed, a thinner separator is achieved, and insulation properties may be excellent at the same time.

The inorganic hybrid porous layer may have a surface contact angle of 30 degrees or less with water. By having a contact angle in the above-mentioned range, coating processability of the electrode adhesive layer may be improved. The surface contact angle with water is an angle measured between the surface of the porous layer and water at 25°C using a contact angle meter. Specifically, the surface contact angle with water may be an angle measured between the surface of the inorganic hybrid porous layer and water.

In the inorganic hybrid porous layer, the inorganic fillers are bound to each other by the binder polymer while being in contact with each other after filling the layer. This creates an interstitial volume between the inorganic fillers, and the interstitial volume between the inorganic fillers becomes an empty space and forms pores. In other words, the binder polymer attaches the inorganic fillers to each other so that these remain bound to each other, and for example, the binder polymer connects and fixes between the inorganic fillers. In addition, the pores of the inorganic hybrid porous layer are pores formed as the interstitial volume between the inorganic fillers becomes an empty space, and this is a space limited by the inorganic fillers that are substantially in contact with each other in a closed packed or densely packed structure by the inorganic fillers.

The inorganic filler allows the formation of empty space between the inorganic fillers, thereby performing a role of forming micropores, while also serving as a kind of a spacer capable of maintaining the physical form. The formed organic/inorganic composite porous film has excellent heat resistance since the physical properties do not change generally even at a high temperature of 200°C or higher.

Accordingly, in a lithium secondary battery comprising the separator, it is difficult for both electrodes to be completely short-circuited due to the inorganic hybrid porous layer even when the olefin polymer porous support is ruptured inside the battery due to an extreme condition caused by internal or external factors such as high temperature, overcharge and external impact. Even if the short-circuit occurs, the short-circuited area is suppressed from expanding significantly, thereby improving battery safety.

The inorganic filler is not particularly limited as long as it is electrochemically stable. In other words, the inorganic filler that may be used in the present disclosure is not particularly limited as long as it does not undergo oxidation and/or reduction reaction in an operating voltage range (for example, 0 V to 5 V based on Li/Li+) of a battery in which it is used. Examples of such an inorganic filler may comprise alumina (Al₂O₃), fumed alumina, aluminum hydroxide (Al(OH)₃), magnesium hydroxide (Mg(OH)₂), boehmite (AlOOH), barium titanate (BaTiO₃), or a mixture of two or more thereof.

The inorganic filler may preferably have an average particle diameter (D50) in a range of 20 nm to 700 nm to form an inorganic hybrid porous layer with uniform thickness and to have proper porosity thereof. Specifically, the average particle diameter (D50) may be in a range of 100 nm to 500 nm. When the average particle diameter (D50) of the inorganic filler satisfies such a range, dispersibility of a slurry for the inorganic hybrid porous layer is maintained, making it easy to control properties of the separator, and problems of reducing mechanical properties caused by an excessive increase in the separator thickness or an occurrence of internal short-circuit during charge and discharge of a battery caused by an excessively large pore size may be prevented. In addition, packing density increases, contributing to a thermal shrinkage rate, and excellent high heat resistance may be obtained in the above-mentioned particle size range.

In the present disclosure, the average particle diameter (D50) of the inorganic filler may be defined as a particle diameter based on 50% in the particle diameter distribution. In the present disclosure, the average particle diameter (D50) of the inorganic filler may be measured by, for example, electron microscope observation using a scanning electron microscope (SEM), a field emission scanning electron microscope (FE-SEM) or the like, or using a laser diffraction method. When measured using a laser diffraction method, more specifically, the inorganic filler is dispersed in a dispersion medium, then the result is introduced to a commercially available laser diffraction particle size measuring device (for example, Microtrac MT 3000) and irradiated with ultrasonic waves of about 28 kHz at an output of 60 W, and then an average particle diameter (D50) based on 50% in the particle diameter distribution in the measuring device may be calculated.

In addition, the inorganic filler may be a primary particle, which is a single particle, or a secondary particle formed from aggregates of primary particles.

The binder polymer is not particularly limited as long as it is capable of providing bonding strength between the inorganic fillers, bonding strength between the inorganic hybrid porous layer and the olefin polymer porous support, and bonding strength between the inorganic hybrid porous layer and an electrode. Examples of the binder resin may comprise any one binder polymer selected from the group consisting of polyvinylidene fluoride-co-hexafluoropropylene (PVdF), polyvinylidene fluoride-co-trichloroethylene, polymethyl methacrylate, polybutyl acrylate, polyacrylonitrile, polyvinyl pyrrolidone, polyvinyl acetate, polyethylene-co-vinyl acetate, polyethylene oxide, polyarylate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan and carboxyl methyl cellulose, or a mixture of two or more thereof, but are not limited thereto. In addition, heat-resistant polymers with high Tm (150°C or higher or 180°C or higher) such as polyacetal, polysulfone (PSF), polyethersulfone (PES), polyetherimide (PEI), polyphenylene sulfide (PPS), polyetheretherketone (PEEK), polyacrylamide (PAAm), polyarylate (PA), polycarbonate, polyamideimide (PAI), polyimide (PI), polyamide, wholly aromatic polyamide (aramid), polyphenylene oxide, polybutylene terephthalate, polyethylene terephthalate, polyetherketone, or a mixture of two or more thereof may be used, however, the binder polymer is not limited thereto.

The content of the binder polymer may be 0.1% to 10% with respect to the total weight of the inorganic hybrid porous layer. Specifically, the content of the binder polymer may be 0.1% or greater, 1% or greater, 3% or greater, 10% or less, or 8% or less with respect to the total weight of the inorganic hybrid porous layer. Comprising the binder polymer in the above-mentioned content range has advantages in that heat resistance properties may be improved and resistance of the separator may be reduced as well, and energy density of a battery may increase.

A secondary battery according to the present disclosure comprises: a positive electrode; a negative electrode; and a separator interposed between the positive electrode and the negative electrode. The electrode to be used in the present disclosure is not particularly limited, and may be manufactured in a form in which an electrode active material is bound to an electrode current collector according to a common method known in the art.

Among the electrode active materials, nonlimiting examples of the positive electrode active material may comprise common positive electrode active materials that may be used in a positive electrode of an existing lithium secondary battery. Particularly, lithium manganese oxide, lithium cobalt oxide, lithium nickel oxide, lithium iron oxide, lithium composite oxide that is a combined form thereof, or the like, is preferably used.

Nonlimiting examples of the negative electrode active material may comprise common negative electrode active materials that may be used in a negative electrode of an existing lithium secondary battery. Particularly, lithium metal or lithium alloy, or lithium adsorbing materials such as carbon, petroleum coke, activated carbon, graphite or other carbonaceous materials, or the like, are preferred.

Nonlimiting examples of the positive electrode current collector may comprise foil made of aluminum, nickel, a combination thereof, or the like, and nonlimiting examples of the negative electrode current collector may comprise foil made of copper, gold, nickel, a copper alloy, a combination thereof, or the like.

A method for manufacturing a separator according to one embodiment of the present disclosure comprises:
preparing an olefin polymer porous support;
applying a slurry comprising inorganic particles, a first binder polymer and a solvent on the olefin polymer porous support, and then drying the slurry to form an inorganic hybrid porous layer; and
applying a slurry comprising a water-dispersible particle-type binder and an aqueous solvent on one surface of the inorganic hybrid porous layer not in contact with the olefin polymer porous support, and then drying the slurry to form an electrode adhesive layer.

In the method for manufacturing a separator, the olefin polymer porous support, the inorganic hybrid porous layer and the electrode adhesive layer are as described above with reference to separator.

Specifically, when forming the electrode adhesive layer, a water-dispersible particle-type binder and an aqueous solvent are mixed to prepare a slurry for forming the electrode adhesive layer, and the slurry is applied on one surface of the inorganic hybrid porous layer not in contact with the olefin polymer porous support.

The method for applying the slurry is not limited as long as it is a method that may be commonly used in the art, such as slot die coating, roll coating, bar coating, spray coating, gravure coating or micro-gravure coating.

The aqueous solvent may comprise at least one selected from water, methanol, ethanol, propyl alcohol, butyl alcohol, butanediol, ethylene glycol, propylene glycol, and tripropylene glycol.

Hereinafter, the present disclosure will be described in detail with reference to examples in order to specifically describe the present disclosure. However, examples according to the present disclosure may be modified to various other forms, and the scope of the present disclosure should not be construed as being limited to the examples described below. The examples of the present disclosure are provided in order to more fully describe the present disclosure to those of ordinary skill in the art.

### Example

### [Manufacture of Separator]

### Example 1

1) A polyethylene substrate film (B09PJ1 of Toray Industries Inc., thickness: 9 *µ*m) was prepared.
2) On both sides of the polyethylene substrate, a slurry in which alumina Al₂O₃ (Daehan Ceramics Co., Ltd., ALK-S1), an acrylic binder polymer (Toyo Ink, CSB-400) and a dispersant CMC (GLChem, SG-L02) (96:2:2, weight ratio) are mixed in water, a solvent, was applied to a thickness of 1.5 *µ*m each to prepare a ceramic coating separator.
3) On one surface of the ceramic coating separator, a first water-dispersible particle-type binder (ZEON Corporation, BM2570, D50=500 nm) and a second water-dispersible particle-type binder (Hansol Chemical, HES-40, D50=800 nm) were mixed in a ratio of 50:50 (wt%) using water as a solvent to prepare an electrode adhesive layer slurry. Herein, the solid content of the slurry was 2.5 parts by weight based on 100 parts by weight of the slurry. The slurry was applied using a micro-gravure coating method and dried with hot air in a drying oven controlled at 60°C or lower to form electrode adhesive layers on both sides. Herein, the loading amount of the electrode adhesive layer was 0.45 g/m² in total for both sides.

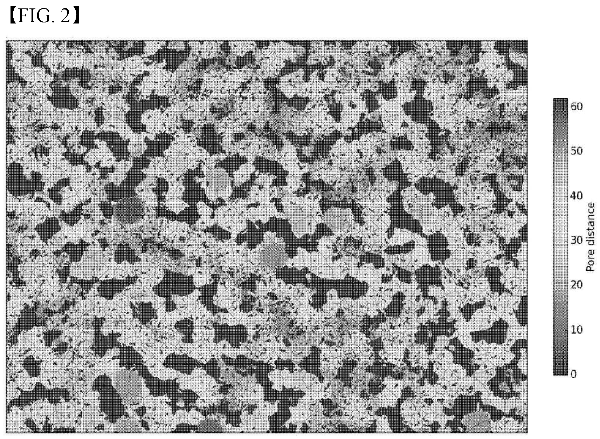

The SEM image of the surface of the manufactured separator after the compression process is shown in FIG. 1, and the adhesive layer domain obtained therefrom through image analysis and machine learning is shown in FIG. 2.

### [Manufacture of Secondary Battery]

97.5% by weight of LiCoO₂, 1.0% by weight of multi-walled carbon nanotubes (MWCNTs, LG Chem) as a conductor, and 1.5% by weight of polyvinylidene fluoride (PVdF, Kureha Corporation, 9700) were mixed and introduced to a N-methyl-2-pyrrolidone solvent, and the mixture was stirred for 30 minutes using a mechanical stirrer to prepare a positive electrode active material slurry. The slurry was applied on a 20 *µ*m-thick aluminum current collector to a thickness of about 80 *µ*m using a doctor blade, dried for 0.5 hours in a hot air dryer at 100°C, and then dried once again for 4 hours under a condition of vacuum and 120°C. The result was roll pressed to a porosity level of 21.5% to manufacture a positive electrode.

96.5% by weight of artificial graphite particles (LC1, Shanshan, Co., Ltd.) having an average particle diameter of 16 *µ*m, 2.3% by weight of a styrene-butadiene rubber (SBR) binder (ZEON Corporation) and 1.2% by weight of carboxyl methyl cellulose (CMC, Daicel, 2200) were mixed and then introduced to distilled water, and the mixture was stirred for 60 minutes using a mechanical stirrer to prepare a negative electrode active material slurry. The slurry was applied on an 8 µm-thick copper current collector to a thickness of about 80 *µ*m using a doctor blade, dried for 0.5 hours in a hot air dryer at 100°C, and then dried once again for 4 hours under a condition of vacuum and 120°C. The result was roll pressed to a porosity level of 24.2% to manufacture a negative electrode.

The separator was interposed between the positive electrode and the negative electrode manufactured above to prepare an electrode assembly, and after embedding the electrode assembly in an electrode case, an organic electrolyte liquid in which 1 M of LiPF₆ is dissolved in a mixed solvent of ethylene carbonate (EC)/ethylmethyl carbonate (EMC) in a volume ratio of 3/7 was injected thereinto to manufacture a secondary battery.

### Example 2

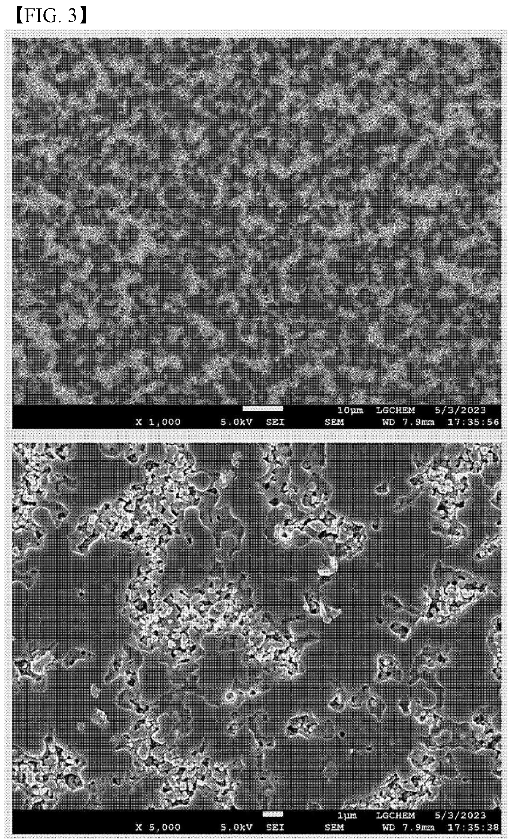

A separator was manufactured in the same manner as in Example 1, except that, on one surface of the ceramic coating separator prepared in 2) of Example 1, the electrode adhesive layer slurry was prepared using a water-dispersible particle-type binder (ZEON Corporation, BM2570, D50=500 nm) alone in water, a solvent. Herein, the loading amount of the electrode adhesive layer was 0.5 g/m² in total for both sides. The SEM image of the surface of the manufactured separator after the compression process is shown in FIG. 3.

A secondary battery was manufactured in the same manner as in Example 1, except that the separator manufactured in Example 2 was used.

### Example 3

A separator was manufactured in the same manner as in Example 1, except that, on one surface of the ceramic coating separator prepared in 2) of Example 1, the electrode adhesive layer slurry was prepared using a water-dispersible particle-type binder (ZEON Corporation, BM2510, D50=500 nm) alone in water, a solvent. Herein, the loading amount of the electrode adhesive layer was 0.5 g/m² in total for both sides.

A secondary battery was manufactured in the same manner as in Example 1, except that the separator manufactured in Example 3 was used.

### Comparative Example 1

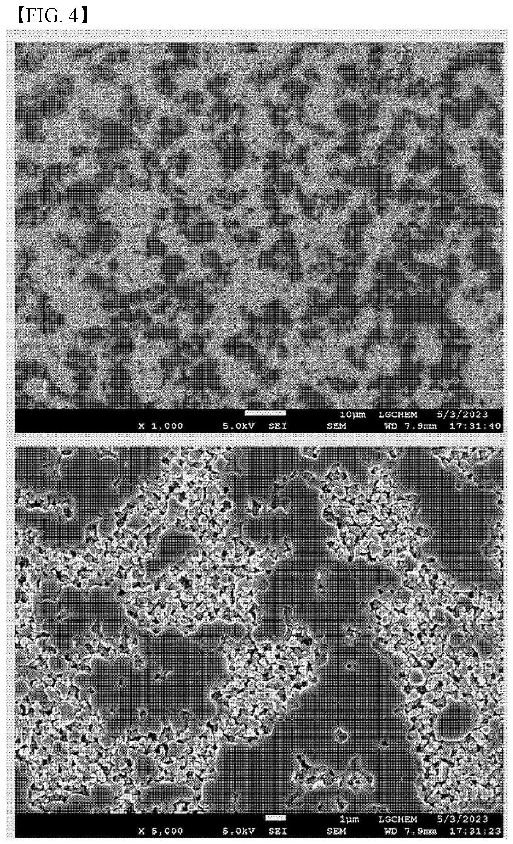

A separator was manufactured in the same manner as in Example 1, except that the loading amount of the electrode adhesive layer was 0.31 g/m² in total for both sides, and the solid content of the slurry was 2.0 parts by weight based on 100 parts by weight of the slurry. Herein, the total coverage of the adhesive portion of the electrode adhesive layer was 19.3% of the total area of the inorganic hybrid porous layer. The SEM image of the surface of the manufactured separator after the compression process is shown in FIG. 4.

A secondary battery was manufactured in the same manner as in Example 1, except that the separator manufactured in Comparative Example 1 was used.

### Comparative Example 2

A separator was manufactured in the same manner as in Example 1, except that the loading amount of the electrode adhesive layer was 1.09 g/m² in total for both sides, and the solid content of the slurry was 3.5 parts by weight based on 100 parts by weight of the slurry. Herein, the total coverage of the adhesive portion of the electrode adhesive layer was 100% of the total area of the inorganic hybrid porous layer.

A secondary battery was manufactured in the same manner as in Example 1, except that the separator manufactured in Comparative Example 2 was used.

### Comparative Example 3

A separator was manufactured in the same manner as in Example 1, except that the loading amount of the electrode adhesive layer was 0.50 g/m², and the electrode adhesive layer was pattern-coated in a manner of engraving a diagonal pattern at an angle of 45 degrees on a micro-gravure roll. Herein, the micro-gravure roll had a pattern in which coated portions and uncoated portions were alternately arranged with lengths of 500 µm each.

A secondary battery was manufactured in the same manner as in Example 1, except that the separator manufactured in Comparative Example 3 was used.

### Evaluation Results

Properties of each of the separators and the secondary batteries of Examples 1 to 3 and Comparative Examples 1 to 3 were evaluated, and the results are shown in the following Table 1.

**[Table 1]**

| | Example 1 | Example 2 | Example 3 | Comparative Example 1 | Comparative Example 2 | Comparative Example 3 |
|---|---|---|---|---|---|---|
| Separator Thickness (µm) | 10.5 | 10.6 | 10.2 | 10.5 | 10.3 | 10.5 |
| Negative Electrode/Separator Adhesion (gf/25 mm) | 27 | 33 | 26 | 12 | 47 | 23 |
| Resistance (ohm) | 0.83 | 0.85 | 0.85 | 0.81 | 0.99 | 0.88 |
| Ratio of Total Coverage of | 38.1 | 50.2 | 49.5 | 19.3 | 100 | 30.5 |
| Adhesive Portion Relative to Total Area of Inorganic Hybrid Porous Layer (%) | | | | | | |
| Loading Amount Per Unit Area of Electrode Adhesive Layer (Based on Both Sides, g/m²) | 0.45 | 0.5 | 0.5 | 0.31 | 1.09 | 0.5 |
| Minor-axis length of Adhesive Portion (µm) | 9.2 | 12.3 | 13.5 | 8.5 | n/a | 270 |
| Capacity Retention Rate (%, 500 cycles) | 94.0 | 92.2 | 92.7 | 93.3 | 90.1 | 88.2 |

### [Separator Thickness]

The coated separator was cut to a size of 50 mm×50 mm using a die-cutting machine, and then the thickness was measured using VL-50S-B of MITUTOYO Corporation. Five points were measured per sample, and an average value thereof was reported.

### [Adhesion]

The coated separator (25 mm width×13 cm length) and the electrode were placed between sheets of A4 paper, and adhered to each other by being pressed for 10 seconds at a temperature of 60°C and a pressure of 1000 kg using a heat press device. The adhered electrode and separator were peeled off by applying force in a 180° direction using a UTM device to measure electrode adhesion of the separator.

### [Resistance]

The coated separator was cut using a die-cutting machine to fit the coin cell structure shown below, and then assembled to fit the structure shown below. Herein, the electrolyte liquid was prepared by adding 1 M of lithium salt LiPF₆ and 2% by weight of VC to a solvent in which EC and EMC are mixed in a volume ratio of 30:70. Four to five drops of the electrolyte liquid were dropped, the result was introduced to a coin cell compressor, and the cap was completely sealed. After that, the coin cell was aged for 3 hours at room temperature, and then resistance was measured.

### [Total Coverage of Adhesive Portion in Electrode Adhesive Layer and Minor-Axis Length of Adhesive Portion]

After the manufactured separator was laminated in the order of release film/separator/negative electrode/separator/positive electrode, the laminate was compressed by applying heat at 85°C and pressure of 10 kg/cm² for 30 seconds. After that, the separator peeled off from the release film was collected, and the surface of the electrode adhesive layer that had been in contact with the release film was observed using a scanning electron microscope (SEM) or optical microscope to obtain an image. The total coverage of the adhesive portion was calculated from the adhesive portion domain in the electrode adhesive layer using machine learning.

In addition, in all the adhesive portion domains in the electrode adhesive layer, the minor-axis length of each individual adhesive portion was measured and averaged to determine the minor-axis length of the adhesive portion. Herein, the minor-axis length was measured as the shortest straight-line distance among straight lines connecting the center of the individual adhesive portion to its edge.

### [Capacity Retention Rate]

Each of the secondary batteries manufactured in Examples 1 to 3 and Comparative Examples 1 to 3 was charged to 4.4 V at 1 C under constant-current/constant-voltage (CC/CV) conditions at 25°C, and then further charged to 1/20 C under constant-voltage (CV) conditions. After completing the charge, the battery was rested for 10 minutes, and then discharged to 3.0 V at 1 C under constant-current (CC) conditions again. This was defined as 1 cycle, and the cycle was repeated 500 times. The capacity retention rate was measured as the ratio of the capacity at the 500^{th} cycle relative to the capacity at the 2^{nd} cycle during the charge-discharge process.

## Claims

1. A separator for an electrochemical device, the separator comprising:
an olefin polymer porous support;
an inorganic hybrid porous layer formed on at least one surface of the olefin polymer porous support; and
an electrode adhesive layer formed on one surface of the inorganic hybrid porous layer not in contact with the olefin polymer porous support,
wherein the electrode adhesive layer comprises at least one adhesive portion and at least one uncoated portion where the adhesive portion is not formed,
a total coverage of the adhesive portion is 20% to 60% of a total area of the inorganic hybrid porous layer, and
a minor-axis length of the adhesive portion is at most twice a thickness of the separator.

2. The separator of claim 1, wherein the adhesive portion has an irregular island shape.

3. The separator of claim 1, wherein the adhesive portion is irregularly distributed in the electrode adhesive layer.

4. The separator of claim 1, wherein the electrode adhesive layer comprises a water-dispersible particle-type binder.

5. The separator of claim 4, wherein the electrode adhesive layer further comprises a wetting agent.

6. The separator of claim 1, wherein the electrode adhesive layer does not comprise a fluorine-based binder.

7. The separator of claim 1, wherein the electrode adhesive layer has a loading amount per unit area of 0.16 g/m² to 0.5 g/m² based on a cross-section.

8. An electrochemical device comprising:
a positive electrode;
a negative electrode; and
a separator interposed between the positive electrode and the negative electrode,
wherein the separator is the separator of any one of claims 1 to 7.

9. The electrochemical device of claim 8, which is a lithium secondary battery.

10. A method for manufacturing the separator of any one of claims 1 to 7, the method comprising:
preparing an olefin polymer porous support;
applying a slurry comprising inorganic particles, a first binder polymer and a solvent on at least one surface of the olefin polymer porous support, and then drying the slurry to form an inorganic hybrid porous layer; and
applying a slurry comprising a water-dispersible particle-type binder and an aqueous solvent on one surface of the inorganic hybrid porous layer not in contact with the olefin polymer porous support, and then drying the slurry to form an electrode adhesive layer.
